(19) **Europäisches Patentamt**

**European Patent Office**

**Office européen des brevets**

(11) **EP 1 630 805 A2**

(12) **EUROPEAN PATENT APPLICATION**

(43) Date of publication:
01.03.2006 Bulletin 2006/09

(51) Int Cl.:
*G11B 15/18* (2006.01)       *G11B 20/10* (2006.01)
*G11B 27/10* (2006.01)       *H04N 5/93* (2006.01)

(21) Application number: 05255144.7

(22) Date of filing: 19.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 30.08.2004 JP 2004250821

(71) Applicant: SONY CORPORATION
Tokyo (JP)

(72) Inventors:
• **Ohsawa, Takao**
  **Shinagawa-ku**
  **Tokyo (JP)**

• **Ueda, Hitoshi**
  **Shinagawa-ku**
  **Tokyo (JP)**
• **Matsui, Yuji**
  **Shinagawa-ku**
  **Tokyo (JP)**

(74) Representative: **Merryweather, Colin Henry**
**J.A. Kemp & Co.**
**14 South Square**
**Gray's Inn**
**London WC1R 5JJ (GB)**

(54) **Reproduction control method and reproducing apparatus**

(57)    The present invention has been made to reproduce data such as video or sound while preventing a video image from being reproduced in a discontinuous manner with respect to a previously reproduced still image in a reproducing apparatus that reproduces a video image and still image that operate in accordance with time information for synchronous reproduction and that have been recorded on a recording medium according to a recording system in which the data size corresponding to one frame is variable. When the reproducing apparatus operates in accordance with time information for synchronous reproduction to reproduce a video image and still image recorded in a recording medium according to a recording system in which the size of data corresponding to one frame is variable, the recording medium is stopped or reversely driven after all the data of the last bank have been picked up or after the reproduction position on the tape has passed over the last bank at the time when the operation mode of the reproducing apparatus is switched from video image reproduction mode to still image reproduction mode.

FIG.1

**Description**

CROSS REFERENCES TO RELATED APPLICATIONS

The present invention contains subject matter related to Japanese Patent Application JP 2004-250821 filed in Japanese Patent Office on August, 30, 2004, the entire contents of which being incorporated herein by reference.

BACKGROUND OF THE INVENTION

1. Field of the Invention

The present invention relates to a reproduction control method for use in a recording/reproducing apparatus such as a video tape recorder and a reproducing apparatus.

2. Description of the Related Art

When a tape drive is once stopped for reproduction of a still image, and the tape drive is restarted for video reproduction in a tape recording/reproducing apparatus, the video image is reproduced in a discontinuous manner with respect to the still image that has been reproduced up to then, in some cases.

To solve the above problem, a method of rewinding the tape simply while controlling the tape drive distance and tape drive timing has been used (refer to, for example, Jpn. Pat. Appln. Publication No. Hei.7-75413).

A format for compressing video data according to, for example, an HDV system and recording the video data on a magnetic tape has been specified as an HDV format of a digital video tape recorder. With this format, variable length data having a variable frame size such as an MPEG-PES (Packtized Elementary Stream) is recorded on a magnetic tape (refer to, for example, Jpn. Pat. Appln. Laid-Open Publication No. 2004-164731).

SUMMARY OF THE INVENTION

However, in the case where video data is recorded on the magnetic tape according to a recording system in which the data size corresponding to one frame is variable, such as the MPEG-PES, the tape drive distance differs from the number of reproduced frames, so that it has been impossible to solve the above problem simply by controlling the tape drive distance and its drive timing. The reason is that even when the tape is rewound by the same distance, there is no certainty that the same number of frames has been rewound.

In view of the above situation, it is desirable to reproduce data such as video or sound while preventing a video image from being reproduced in a discontinuous manner with respect to a previously reproduced still image in a reproducing apparatus that operates with time information for synchronous reproduction and reproduces a video image and still image that have been recorded on a recording medium according to a recording system in which the data size corresponding to one frame is variable.

The advantages and features of the present invention will be more apparent from the following description taken in conjunction with the accompanying drawings.

According to the present invention, there is provided a reproduction control method for use in a reproducing apparatus which operates in accordance with time information for synchronous reproduction to reproduce a video image and still image which are recorded in a recording medium according to a recording system in which the size of data corresponding to one frame is variable, including the step of: stopping or reversely driving the recording medium after all the data of the last bank have been picked up or after the reproduction position on the tape has passed over the last bank at the time when the operation mode of the reproducing apparatus is switched from video image reproduction mode to still image reproduction mode.

According to the present invention, there is provided a reproduction control method for use in a reproducing apparatus which operates in accordance with time information for synchronous reproduction to reproduce a video image and still image which are recorded in a recording medium according to a recording system in which the size of data corresponding to one frame is variable, including the steps of: once rewinding the recording medium in the backward direction with respect to the reproduction direction at the time when the operation mode of the reproducing apparatus is switched from still image reproduction mode to video image reproduction mode; restarting drive of the recording medium in the forward direction while reading out the time information for synchronous reproduction recorded in the recording medium; calculating decode time based on the time information for synchronous reproduction that has been read out from the recording medium before or during approach run and rewinding reference time depending on the calculation result; restarting supply of the reproduced data based on a result obtained by comparing the reference time of which measurement has been restarted from the reference time that had been rewound before or during the approach run and decode time; and latching the reference time of which measurement has been restarted from the reference time that had been rewound before or during the approach run and restarting a video reproduction according to a result obtained by comparing the reference time, decode time, and presentation time.

According to the present invention, there is provided a reproducing apparatus which operates in accordance with time information for synchronous reproduction to reproduce a video image and still image which are recorded in a recording medium according to a recording system in which the size of data corresponding to one frame is variable, including: control means for stopping or reversely driving the recording medium after all the data of the last bank have been picked up or after the reproduction position on the tape has passed over the last bank at the time when the operation mode of the reproducing apparatus is switched from video image reproduction mode to still image reproduction mode.

According to the present invention, there is provided a reproducing apparatus which operates in accordance with time information for synchronous reproduction to reproduce a video image and still image which are recorded in a recording medium according to a recording system in which the size of data corresponding to one frame is variable, including: drive means for driving the recording medium in the forward direction or backward direction; reproduction processing means for reproducing the data from a reproduced signal obtained from the recording medium driven by the drive means; decode processing means for decoding the data reproduced by the reproduction processing means and outputting the decoded data; and control means for controlling the operations of the above means, wherein, at the time when the operation mode of the reproducing apparatus is switched from still image reproduction mode to video image reproduction mode, the control means once rewinds the recording medium in the direction opposite to the reproduction direction; restarts drive of the recording medium in the forward direction while reading out the time information for synchronous reproduction recorded in the recording medium; calculates decode time based on the time information for synchronous reproduction that the reproduction processing means has read out from the recording medium before or during approach run; rewinds the reference time depending on the calculation result; restarts supply of the reproduced data based on a result obtained by comparing the reference time of which measurement has been restarted from the reference time that had been rewound before or during the approach run and decode time; allows the decode processing means to latch the reference time of which measurement has been restarted from the reference time that had been rewound before or during the approach run; and restarts a video reproduction according to a result obtained by comparing the reference time, decode time, and presentation time.

According to the present invention, it is possible to reproduce data such as video or sound while preventing a video image from being reproduced in a discontinuous manner with respect to a previously reproduced still image in a reproducing apparatus which operates in accordance with time information for synchronous reproduction to reproduce a video image and still image which are recorded in a recording medium according to a recording system in which the size of data corresponding to one frame is variable.

BRIEF DESCRIPTION OF THE DRAWINGS

FIG. 1 is a block diagram showing a configuration of a reproducing apparatus according to the present invention;
FIG. 2 is a view schematically showing a video data recording state on a magnetic tape in the reproducing apparatus;
FIG. 3 is a view schematically showing a tape drive state in the case where operation mode in the reproducing apparatus is switched from video image reproduction (PB) mode to still image reproduction (PB Pause) mode, and then switched from still image reproduction (PB Pause) mode to video image reproduction (PB) mode;
FIG. 4 is a view schematically showing operations of respective sections in the reproducing apparatus when the operation mode is switched from video image reproduction (PB) mode to still image reproduction (PB Pause) mode; and
FIG. 5 is a view schematically showing operations of respective sections in the reproducing apparatus when the operation mode is switched from still image reproduction (PB Pause) mode to video image reproduction (PB) mode.

DETAILED DESCRIPTION OF THE PREFERRED EMBODIMENTS

An embodiment of the present invention will be described below in detail with reference to the accompanying drawings. It should be noted that the present invention is not limited to the following embodiment and can be arbitrarily modified without departing from the spirit and scope of the invention.

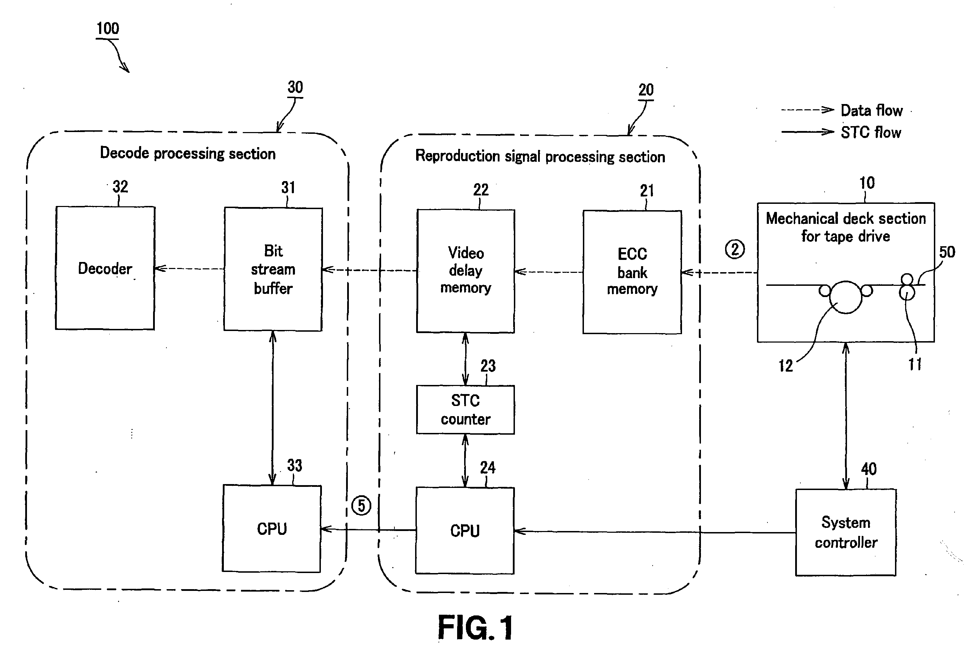

The present invention is applied, for example, to a reproducing apparatus 100 as shown in FIG. 1.

The reproducing apparatus 100 includes a mechanical deck section 10 for tape drive, a reproduction signal processing section 20 to which a reproduced signal is supplied from the mechanical deck section 10 for tape drive, a decode processing section 30 to which reproduced data obtained by the reproduction signal processing section 20 is supplied, and a system controller 40 which controls the above sections.

In the reproducing apparatus 100, the mechanical deck section 10 includes a tape running system 11 allows a magnetic tape 50 to run, and a rotation head 12 which scans tracks on the magnetic tape 50. The mechanical deck section 10 allows the rotation head 12 to scan the magnetic tape 50 driven by the tape running system 11 to obtain a reproduced signal and supplies the reproduction signal processing section 20 with the obtained reproduced signal.

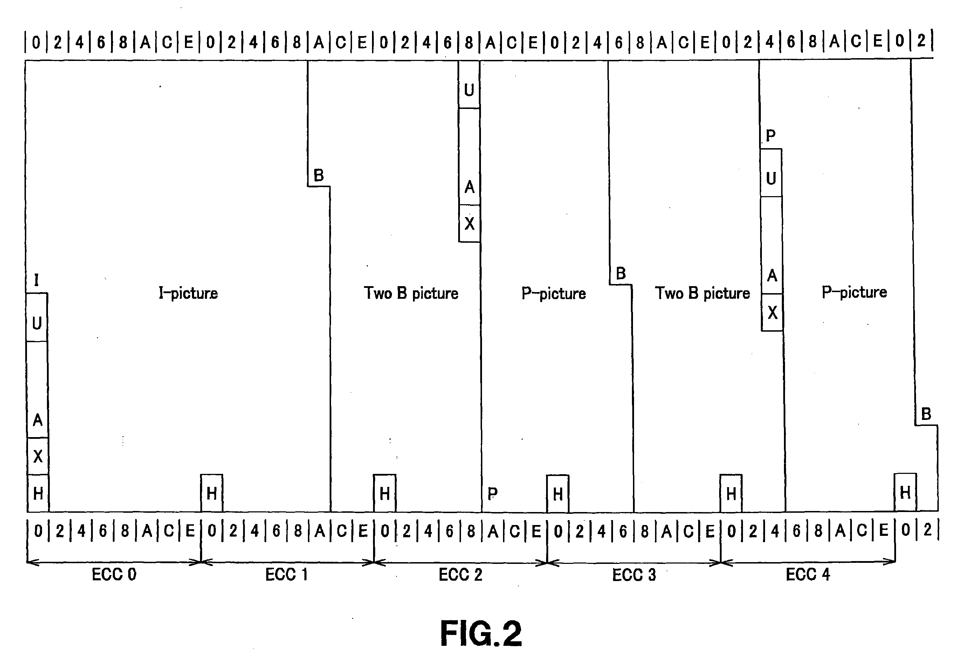

On the magnetic tape, MPEG-PES data in which the data size corresponding to one frame is variable has been recorded as shown in FIG. 2. FIG. 2 shows a recording state of video data having a GOP structure of N = 15 (I-picture is placed every 15 pictures) and M = 3 (P-picture is placed every 3 pictures) on the magnetic tape. That is, one pack is constituted by M (three, in this case) picture data, AUX data (AUX-V: U in FIG. 2) related to the picture, audio data (A in FIG. 2) related to the picture, and AUX data (AUX-A: X in FIG. 2) related to the audio data.

The above video data is subjected to ECC (Error Correcting Code) processing with data corresponding to 16 tracks as a unit, and thereby ECCTB (Error Correction Code Table Block) (H in FIG. 2: packet placed in a sync block to be assigned to the recording of the top of ECC block) storing predetermined information is placed on the first track of every 16 tracks. A unit including 16 tracks, which is a unit of ECC processing, is referred to as ECC bank.

In the reproducing apparatus 100, the reproduction signal processing section 20 includes an ECC bank memory 21, a video delay memory 22, an STC counter 23, a reproduction control microcomputer 24 and the like. Reproduced unit data per the ECC processing is fetched from the reproduced signal obtained by the mechanical deck section 10 for tape drive and is written into the ECC bank memory 21. The reproduced unit data per the ECC processing that has been written into the ECC bank memory 21 is then subjected to error correcting processing and is supplied to the decode processing section 30 through the video delay memory 22.

In the reproducing apparatus 100, the decode processing section 30 includes a bit stream buffer 31, a decoder 32, a decode control microcomputer 33, and the like. The reproduced data obtained by the reproduction signal processing section 20 is supplied to the decoder 32 through the bit stream buffer 31. The decoder 32 then decodes the reproduced data and outputs the decoded data.

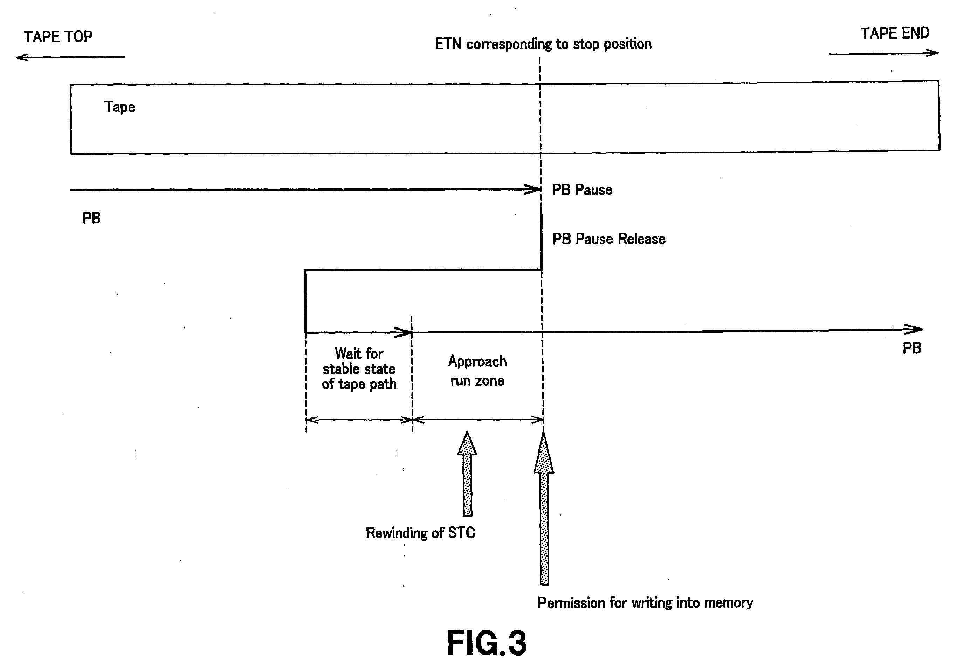

Next, an operation of the reproducing apparatus 100 having the above configuration will be described. Here, the magnetic tape 50 is driven and operation mode in the reproducing apparatus is switched from video image reproduction (PB) mode to still image reproduction (PB Pause) mode, and then switched from still image reproduction (PB Pause) mode to video image reproduction (PB) mode, as shown in FIG. 3.

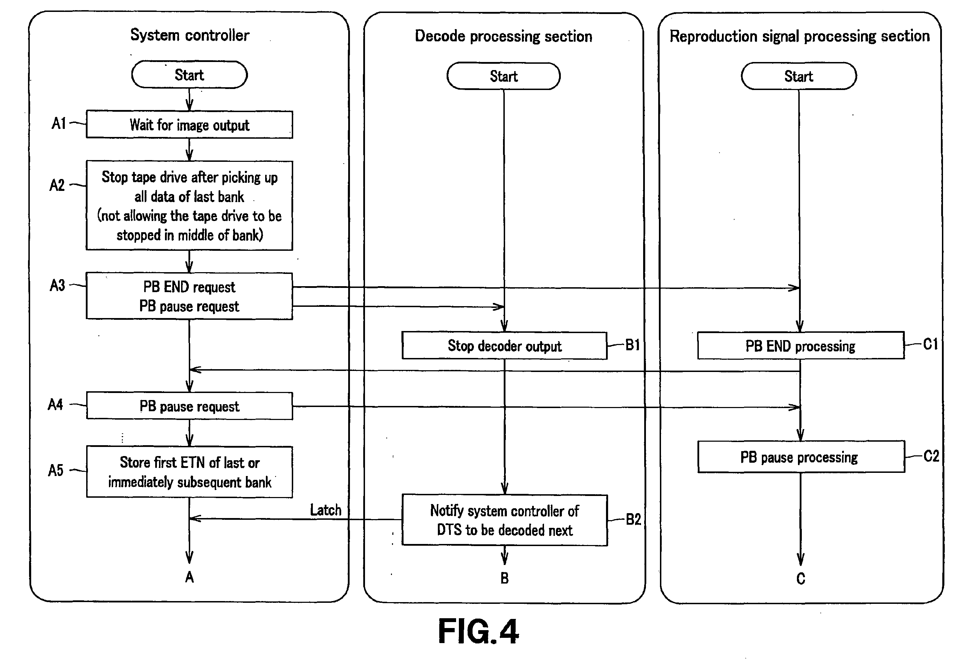

Operations of the mechanical deck section 10 for tape drive, reproduction signal processing section 20 to which a reproduced signal is supplied from the mechanical deck section 10 for tape drive, decode processing section 30 to which the reproduced signal obtained by the reproduction signal processing section 20 is supplied, and system controller 40 which controls the above sections at the time when the operation mode of the reproducing apparatus 100 is switched from video image reproduction (PB) mode to still image reproduction (PB Pause) mode are shown in FIG. 4.

When the operation mode is switched from video image reproduction (PB) mode to still image reproduction (PB Pause) mode, the system controller 40 does not stop tape drive in the middle of bank, but waits for image output (A1) and stops the tape drive after pick-up of all the data of the last bank (A2), or waits for the reproduction position on the tape to pass over the last bank and stops the tape drive in the bank subsequent to the last bank. Thereafter, the system controller 40 requests the reproduction control microcomputer 24 of the reproduction signal processing section 20 to switch the operation mode to still image reproduction mode (PB Pause) and requests the decode control microcomputer 33 of the decode processing section 30 to perform reproduction end (PB END) processing (A3).

Upon receiving the operation mode switch request (to PB pause) from the system controller 40, the decode control microcomputer 33 of the decode processing section 30 stops the supply of the reproduced data obtained by the reproduction signal processing section 20 to the decoder 32 through the bit stream buffer 31 to allow the decoder 32 to stop the decode of the reproduced data to thereby stop the reproduction data output (B1) and notifies the system controller 40 of DTS (Decoding time stamp) to be decoded next (B2).

Upon receiving the reproduction end (PB END) request from the system controller 40, the reproduction control microcomputer 24 of the reproduction signal processing section 20 performs the reproduction end processing (C1) and notifies the system controller 40 of the completion of the reproduction end processing.

Upon receiving the notification of the completion of the reproduction end processing from the reproduction control microcomputer 24 of the reproduction signal processing section 20, the system controller 40 requests the reproduction control microcomputer 24 to switch the operation mode to still image reproduction (PB Pause) mode (A4) and stores a first ETN (Extended track number) of the last bank or immediately subsequent bank (A5).

Upon receiving the operation mode switch request (to PB pause) from the system controller 40, the reproduction control microcomputer 24 of the reproduction signal processing section 20 performs processing of still image reproduction (PB Pause) mode.

ETN (Extended track number) is track number that can be obtained by converting DTS (Decoding time stamp). The following relationship exists between ETN and DTS :

$$DTS = (ETN - 10) \times (clock\ number\ /\ 10)$$

where clock number is 3003 in the case of NTSC and 3600 in the case of PAL.

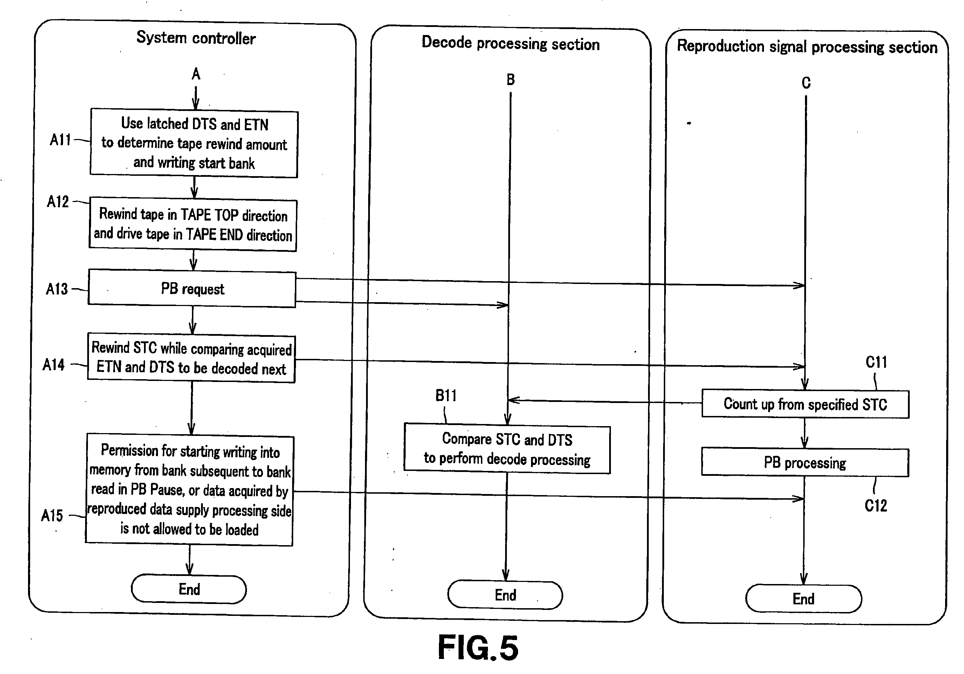

Next, operations of the mechanical deck section 10 for tape drive, reproduction signal processing section 20 to which a reproduced signal is supplied from the mechanical deck section 10 for tape drive, decode processing section 30 to which reproduced data obtained by the reproduction signal processing section 20 is supplied, and system controller 40 which controls the above sections at the time when the operation mode of the reproducing apparatus 100 is switched from still image reproduction (PB Pause) mode to video image reproduction (PB) mode are shown in FIG. 5.

When the operation mode is switched from still image reproduction (PB Pause) mode to video image reproduction (PB) mode, the system controller 40 uses the stored ETN (Extended track number) and DTS (Decoding time stamp) notified by the decode control microcomputer 33 of the decode processing section 30 in the abovementioned operation switch control from video image reproduction (PB) mode to still image reproduction (PB Pause) mode to determine a tape rewind amount and writing start bank (A11). The system controller 40 then once rewinds the magnetic tape 50 and, after that, forwards the magnetic tape 50 (A12). The system controller 40 then requests the reproduction control microcomputer 24 of the reproduction signal processing section 20 and the decode control microcomputer 33 of the decode processing section 30 to switch the operation mode to video reproduction (PB) mode (A13).

As a result, the tape drive is restarted in the forward direction (approach run) while the system controller 40 reads out time information (ETN) for synchronous reproduction recorded on the magnetic tape 50.

The system controller 40 then calculates decode time (DTS) from the time information (ETN) for synchronous reproduction that has been read out from the magnetic tape 50 before or during the approach run and, depending on the calculation result, rewinds the reference time (STC) of the decode processing section 30 and reproduction signal processing section 20 (A14).

The reproduction control microcomputer 24 of the reproduction signal processing section 20 restarts measurement using the STC counter 23 (C11) from the reference time (STC) that has been rewound by the system controller 40 before or during the approach run, compares the reference time (STC) measured using the STC counter 23 and decode time (DTS), and restarts supply of reproduced data to the decode processing section 30 (C12) according to the comparison result (STC $\geqq$ DTS - VBV_Delay - offset due to hardware delay, etc.).

VBV_Delay is a delay of the video delay memory 22.

The decode control microcomputer 33 of the decode processing section 30 latches, from the STC counter 23 of the reproduction signal processing section 20, the reference time (STC) the measurement of which has been restarted from the reference time (STC) that had been rewound before or during the approach run and restarts video reproduction (B1) according to a result obtained by comparing the latched reference time (STC), decode time (DTS), and presentation time (PTS: Presentation Time Stamp).

The reproducing apparatus 100 that performs the above processing uses, at the time of restart of video reproduction, time information (ETN) (track number that can be obtained by converting decode time (DTS)) for synchronous reproduction to adjust the rewinding amount of reference time (STC) and tape drive timing and restarts video reproduction based on the rewound reference time (STC), thereby preventing the restarted video image from being reproduced in a discontinuous manner with respect to a previously reproduced still image.

The tape distance to be rewound in the tape end direction is defined by [(average track number per one picture) x (picture number needed to be retrieved from buffer by the time when tape position returns to ETN corresponding to stop position) + (distance needed to wait for stable state of tape path running) + (distance needed to accelerate up to one-fold speed to achieve tracking)]. The tape may be rewound by an extra distance for allowing a margin.

The above method adjusts the number of pictures to be used up in decode processing by the time when the tape position returns to ETN corresponding to the stop position and timing at which data supply to the buffer is restarted, thereby preventing a buffer overflow.

Alternatively, in addition to the above method in which the tape rewind distance changes depending on the number of pictures needed to be retrieved from the buffer, another method can be employed, in which stop time may be provided for the tape drive in order to adjust the time until the restart of PB so that the number of pictures needed to be retrieved from the buffer by the time when the tape position returns to ETN corresponding to the stop position are used up.

It should be understood by those skilled in the art that various modifications, combinations, sub-combinations and alternations may occur depending on design requirements and other factors insofar as they are within the scope of the appended claims or the equivalents thereof.

**EP 1 630 805 A2**

**Claims**

1. A reproduction control method for use in a reproducing apparatus which operates in accordance with time information for synchronous reproduction to reproduce a video image and still image which are recorded in a recording medium according to a recording system in which the size of data corresponding to one frame is variable, comprising the step of:

> stopping or reversely driving the recording medium after all the data of the last bank have been picked up or after the reproduction position on the tape has passed over the last bank at the time when the operation mode of the reproducing apparatus is switched from video image reproduction mode to still image reproduction mode.

2. A reproduction control method for use in a reproducing apparatus which operates in accordance with time information for synchronous reproduction to reproduce a video image and still image which are recorded in a recording medium according to a recording system in which the size of data corresponding to one frame is variable, comprising the steps of:

> once rewinding the recording medium in the backward direction with respect to the reproduction direction at the time when the operation mode of the reproducing apparatus is switched from still image reproduction mode to video image reproduction mode;
> restarting drive of the recording medium in the forward direction while reading out the time information for synchronous reproduction recorded in the recording medium;
> calculating decode time based on the time information for synchronous reproduction that has been read out from the recording medium before or during approach run and rewinding reference time depending on the calculation result;
> restarting supply of the reproduced data based on a result obtained by comparing the reference time of which measurement has been restarted from the reference time that had been rewound before or during the approach run and decode time; and
> latching the reference time of which measurement has been restarted from the reference time that had been rewound before or during the approach run and restarting a video reproduction according to a result obtained by comparing the reference time, decode time, and presentation time.

3. A reproducing apparatus which operates in accordance with time information for synchronous reproduction to reproduce a video image and still image which are recorded in a recording medium according to a recording system in which the size of data corresponding to one frame is variable, comprising:

> control means for stopping or reversely driving the recording medium after all the data of the last bank have been picked up or after the reproduction position on the tape has passed over the last bank at the time when the operation mode of the reproducing apparatus is switched from video image reproduction mode to still image reproduction mode.

4. A reproducing apparatus which operates in accordance with time information for synchronous reproduction to reproduce a video image and still image which are recorded in a recording medium according to a recording system in which the size of data corresponding to one frame is variable, comprising:

> drive means for driving the recording medium in the forward direction or backward direction;
> reproduction processing means for reproducing the data from a reproduced signal obtained from the recording medium driven by the drive means;
> decode processing means for decoding the data reproduced by the reproduction processing means and outputting the decoded data; and
> control means for controlling the operations of the above means, wherein,
> at the time when the operation mode of the reproducing apparatus is switched from still image reproduction mode to video image reproduction mode, the control means once rewinds the recording medium in the direction opposite to the reproduction direction; restarts drive of the recording medium in the forward direction while reading out the time information for synchronous reproduction recorded in the recording medium; calculates decode time based on the time information for synchronous reproduction that the reproduction processing means has read out from the recording medium before or during approach run; rewinds the reference time depending on the calculation result; restarts supply of the reproduced data based on a result obtained by comparing the reference time of which measurement has been restarted from the reference time that had been

6

rewound before or during the approach run and decode time; allows the decode processing means to latch the reference time of which measurement has been restarted from the reference time that had been rewound before or during the approach run; and restarts a video reproduction according to a result obtained by comparing the reference time, decode time, and presentation time.

**5.** A reproducing apparatus which operates in accordance with time information for synchronous reproduction to reproduce a video image and still image which are recorded in a recording medium according to a recording system in which the size of data corresponding to one frame is variable, comprising:

a control section that stops or reversely drives the recording medium after all the data of the last bank have been picked up or after the reproduction position on the tape has passed over the last bank at the time when the operation mode of the reproducing apparatus is switched from video image reproduction mode to still image reproduction mode.

**6.** A reproducing apparatus which operates in accordance with time information for synchronous reproduction to reproduce a video image and still image which are recorded in a recording medium according to a recording system in which the size of data corresponding to one frame is variable, comprising:

a drive section that drives the recording medium in the forward direction or backward direction;
a reproduction processing section that reproduces the data from a reproduced signal obtained from the recording medium driven by the drive section;
a decode processing section that decodes the data reproduced by the reproduction processing section and outputs the decoded data; and
a control section that controls the operations of the above section, wherein,
at the time when the operation mode of the reproducing apparatus is switched from still image reproduction mode to video image reproduction mode, the control section once rewinds the recording medium in the direction opposite to the reproduction direction; restarts drive of the recording medium in the forward direction while reading out the time information for synchronous reproduction recorded in the recording section; calculates decode time based on the time information for synchronous reproduction that the reproduction processing section has read out from the recording medium before or during approach run; rewinds the reference time depending on the calculation result; restarts supply of the reproduced data based on a result obtained by comparing the reference time of which measurement has been restarted from the reference time that had been rewound before or during the approach run and decode time; allows the decode processing section to latch the reference time of which measurement has been restarted from the reference time that had been rewound before or during the approach run; and restarts a video reproduction according to a result obtained by comparing the reference time, decode time, and presentation time.

**FIG.1**

| 0 | 2 | 4 | 6 | 8 | A | C | E | 0 | 2 | 4 | 6 | 8 | A | C | E | 0 | 2 | 4 | 6 | 8 | A | C | E | 0 | 2 | 4 | 6 | 8 | A | C | E | 0 | 2 | 4 | 6 | 8 | A | C | E | 0 | 2 |

**FIG.2**

TAPE TOP

ETN corresponding to stop position

TAPE END

Tape

PB Pause

PB

PB Pause Release

Wait for
stable state
of tape path

Approach
run zone

PB

Rewinding of STC

Permission for writing into memory

# FIG.3

FIG.4

EP 1 630 805 A2

EP 1 630 805 A2

| System controller | Decode processing section | Reproduction signal processing section |
|---|---|---|

A

A11 — Use latched DTS and ETN to determine tape rewind amount and writing start bank

A12 — Rewind tape in TAPE TOP direction and drive tape in TAPE END direction

A13 — PB request

A14 — Rewind STC while comparing acquired ETN and DTS to be decoded next

A15 — Permission for starting writing into memory from bank subsequent to bank read in PB Pause, or data acquired by reproduced data supply processing side is not allowed to be loaded

End

B

B11 — Compare STC and DTS to perform decode processing

End

C

C11 — Count up from specified STC

PB processing — C12

End

**FIG.5**